# EUROPEAN PATENT APPLICATION

(11) **EP 2 211 407 A1**
(43) Date of publication of application: **28.07.2010**
(21) Application number: 08840722.6
(22) Date of filing: 14.10.2008
(51) Int. Cl.: H01M 4/92, B01J 23/52, H01M 4/88, H01M 8/02, H01M 8/10

(54) **FUEL CELL AND LOADED CATALYST USED THEREIN**

(30) Priority: 15.10.2007 JP 2007268157
(71) Applicant: Cataler Corporation, Kakegawa-shi Shizuoka 437-1492 (JP); Toyota Jidosha Kabushiki Kaisha, Toyota-shi, Aichi 471-8571 (JP)
(72) Inventor: TABATA, Toshiharu c/o CATALER CORPORATION, Shizuoka 437-1492 (JP); TERADA, Tomoaki c/o CATALER CORPORATION, Shizuoka 437-1492. (JP); NAGATA, Takahiro c/o CATALER CORPORATION, Shizuoka 437-1492 (JP); KATAOKA, Mikihiro c/o CATALER CORPORATION, Shizuoka 437-1492 (JP); TAKAHASHI, Hiroaki, Aichi 471-8571 (JP); MIZUTANI, Nobuaki, Aichi 471-8571 (JP); HORIUCHI, Yousuke c/o CATALER CORPORATION, Shizuoka 437-1492 (JP)
(74) Representative: Luderschmidt, Wolfgang
(86) International application number: PCT/JP2008/068592
(87) International publication number: WO 2009/051110

(57) **Abstract**

A fuel cell having an excellent life property is achieved. A supported catalyst for a fuel cell includes a catalytic particle made of an alloy of platinum and gold, and a conductive carrier supporting the catalytic particle. 50% or more of gold forms a solid solution with platinum.

## Description

### Technical Field

The present invention relates to a fuel cell.

### Background Art

As an electrode catalyst for a fuel cell, widely known is the one that uses platinum as a catalytic component, that is, a platinum catalyst. A fuel cell using such a catalyst, however, has a problem that it easily deteriorates with the passage of time. For this reason, as described in JP-A 9-161811 (KOKAI), there are times when an alloy of platinum and iron (platinum-iron alloy catalyst) is used as a catalytic component of an anode instead of platinum.

### Disclosure of Invention

The present inventors have conducted further tests on the conventional fuel cells in terms of endurance. As a result, the following facts were revealed.

In the case of using a platinum-iron catalyst as a catalytic component of an anode in a fuel cell, elution of a catalytic metal can be suppressed to some extent as compared with the case of using a platinum catalyst. However, when such a fuel cell is used for a long period of time, for example, 100 hours or more, the catalytic component can deteriorate.

An object of the present invention is to provide an electrode catalyst component for a fuel cell which is less prone to cause deterioration of a catalytic component even after used for a long period of time, for example, 100 hours or more (hereinafter expressed as having an excellent life property), and a fuel cell using such a catalyst component.

According to a first aspect of the present invention, there is provided a supported catalyst for a fuel cell, comprising a catalyst particle made of an alloy of platinum and gold, and a conductive carrier supporting the catalyst particle, wherein 50% or more of gold forms a solid solution with platinum.

According to a second aspect of the present invention, there is provided a fuel cell comprising a catalyst layer including the supported catalyst according to the first aspect as anode catalyst layer and/or cathode catalyst layer.

Without willing to be bound by theory, the present inventors consider the reason why a platinum catalyst has an insufficient life property to be as follows. A sudden change in electric potential caused in the course of operating a fuel cell renders platinum atoms electronically unstable. In other words, platinum atoms are prone to be ionized, and therefore a life property of the platinum catalyst is insufficient.

By contrast, in an electrode catalyst for a fuel cell according to the present invention, gold atoms are contained in the crystal structure of platinum to form a solid solution. When this structure is employed, platinum atoms are stabilized. This is considered to be a reason why employing the above structure makes it possible to maintain a relatively stable catalytic activity for a long period of time even under such a condition that an electric potential is changed suddenly.

### Brief Description of Drawings

FIG. 1 is sectional view schematically showing a structure which can be employed in a fuel cell according to an embodiment of the present invention;
FIG. 2 is a graph showing an example of an effect of gold on a voltage after endurance test;
FIG. 3 is a graph showing an example of an effect of gold on a rate of voltage drop;
FIG. 4 is a graph showing an example of a relationship between a ratio of solid solution formation and a voltage after endurance test; and
FIG. 5 is a graph showing an example of a relationship between a ratio of solid solution formation and a rate of voltage drop.

### Best Mode for Carrying Out the Invention

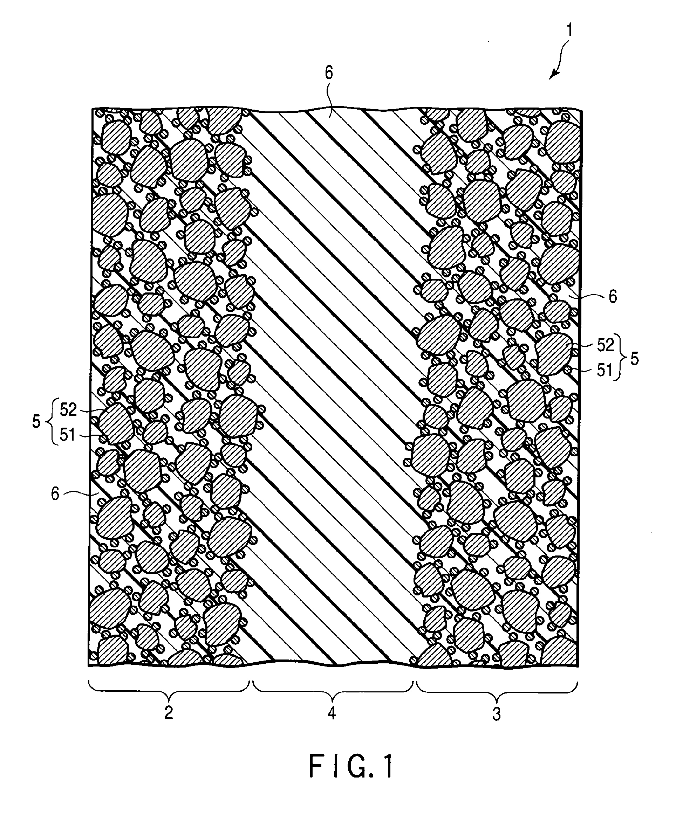

An embodiment of the present invention will be described in detail below with reference to the accompanying drawings. Note that the same reference numerals denote the same or similar components in the drawings, and a repetitive explanation thereof will be omitted. FIG. 1 is a sectional view schematically showing a structure which can be employed in a fuel cell according to an embodiment of the present invention. FIG. 1 shows a membrane electrode assembly for a polymer electrolyte fuel cell as an example.

The membrane electrode assembly 1 includes an anode catalyst layer 2, a cathode catalyst layer 3, and a proton-conductive solid electrolyte layer 4 interposed between them and containing a proton-conductive solid electrolyte.

The anode catalyst layer 2 and the cathode catalyst layer 3 contain supported catalysts 5 each including catalytic metal 51 supported by a conductive carrier 52, and a proton-conductive solid electrolyte 6. The proton-conductive solid electrolyte layer 4 contains the proton-conductive solid electrolyte 6.

At least one of the anode catalyst layer 2 and the cathode catalyst layer 3, typically at least the anode catalyst layer 2 contains supported catalysts 5 using as the catalytic metal 51 an alloy of platinum and gold, which will be described in detail later. Here, as an example, it is supposed that both the anode catalyst layer 2 and the cathode catalyst layer 3 contain the supported catalysts 5 which use an alloy of platinum and gold as the catalytic metal 51. Hereinafter, when expressed as "platinum alloy", it refers to an alloy of platinum and gold unless it is specified as an alloy of platinum and a metal other than gold.

The conductive carriers 52 are made, for example, of a carbonaceous material. As the carbonaceous material, for example, carbon black, activated carbon, or a mixture thereof can be used. Normally, as the conductive carriers 52, used are the ones having an average particle diameter of about 100 nm or less.

The proton-conductive solid electrolyte 6 in the anode catalyst layer 2, cathode catalyst layer 3, and proton-conductive solid electrolyte layer 4 contains, for example, water. As the proton-conductive solid electrolyte 6, a proton-conductive solid electrolyte having an -SO₃⁻ group or the like can be used. As this proton-conductive solid electrolyte, it is possible to use a perfluorosulfonic acid ionomer represented by Nafion (registered trademark) and indicated by the structural formula below. Also, it is possible to use the same proton-conductive solid electrolyte 6 or different proton-conductive solid electrolytes 6 in the anode catalyst layer 2, cathode catalyst layer 3, and proton-conductive solid electrolyte layer 4 of the membrane electrode assembly 1 shown in FIG. 1.

Although described here is the case where both the anode catalyst layer 2 and the cathode catalyst layer 3 utilize the supported catalysts 5 which use the alloy of platinum and gold as the catalyst metal 51, the effect of improving the life property can be achieved even in the case where the supported catalysts 5 are utilized either of the anode catalyst layer 2 and the cathode catalyst layer 3.

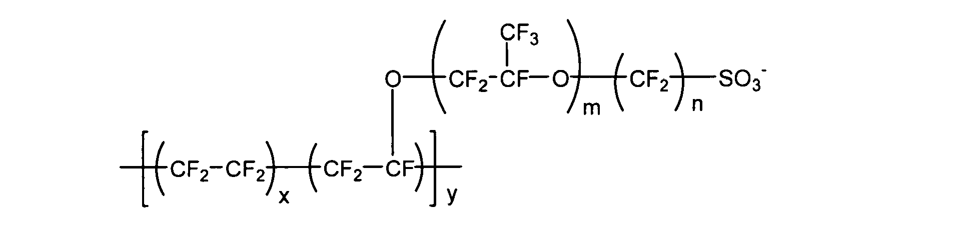

Next, the platinum alloy used as the catalyst metal 51 will be described.

Platinum becomes unstable when an electric potential changes rapidly. In the case where platinum is ionized to be dissolved into the proton-conductive solid electrolyte 6, the catalytic metal 51 and/or the electrolyte 6 will deteriorate, and thus an excellent life property cannot be achieved.

The above-described platinum alloy includes a solid solution of platinum with gold. That is, the platinum alloy includes an interstitial solid solution in which gold atoms are located at interstices of the space lattice unique to platinum; a substitutional solid solution in which platinum atoms arranged at specific positions are randomly substituted by gold atoms; or a mixture thereof.

In such a platinum alloy, gold supplies platinum with electrons so as to stabilize platinum, and thus elution of platinum is less prone to occur. Therefore, when using the platinum alloy as the catalytic metal 51, a fuel cell excellent in life property can be achieved.

The platinum alloy can further include an alloy other than a solid solution such as an intermetallic compound of platinum with gold. In any case, a ratio of gold which forming a solid solution with respect to the whole amount of gold, that is, "a ratio of solid solution formation" should be set at 50% or more. In the case where the ratio of solid solution formation is small, achieving an excellent life property is difficult.

A molar ratio of gold to platinum is set to be, for example, within a range of 0.013 to 0.4, and typically within a range of 0.015 to 0.2. In the case where the molar ratio is small, achieving an excellent life property is difficult. In the case where the molar ratio is great, achieving an excellent initial performance is difficult.

It is possible that an element other than platinum and gold is further dissolved in the above-described solid solution within the bounds of not having an influence on the catalytic component. However, when dissolving iron element into the crystal structure of platinum, iron ions eluted during the endurance test produce radicals of H₂O₂ to degrade the layer, and thus the performance after the endurance test may deteriorate. For this reason, it is lesser preferable to intentionally dissolve iron therein.

### Example

Examples of the present invention will be described below.

### <Preparation of catalyst powder CP1>

Supported catalysts 5 were prepared by the following method.

First, 5.48 g of commercially available carbon black powder having a high specific surface was dispersed in 0.5 L of pure water. Then, a hexahydroxo platinate nitrate solution containing 4.48 g of platinum was dropped in the dispersion. Subsequently, an aqueous solution of gold chloride containing about 0.05 g of gold was dropped in the dispersion. In addition, the pH value of the dispersion was adjusted at about 9 by adding about 5 mL of 0.01N aqueous ammonium thereto so as to allow hydroxides of platinum and gold to be deposited onto the carbon black powder.

Next, the dispersion was filtrated, and the filter cake was dispersed into pure water for washing. After repeating filtration and washing until conductivity of the filtrate reaches to 50 µS/cm or less, the powder thus obtained was subjected to a vacuum drying process at 100°C for 10 hours. Thereafter, this was heated in a hydrogen atmosphere at 500°C for 2 hours so as to reduce platinum and gold. Further, this was heated in a nitrogen atmosphere at 1,000°C for two hours so as to produce an alloy of platinum and gold.

In this way, a supported catalyst 5 having a molar ratio of gold to platinum of 0.010 was obtained. Hereinafter, the supported catalyst 5 thus obtained will be referred to as catalyst powder CP1.

### <Preparation of catalyst powder CP2>

A supported catalyst 5 having a molar ratio of gold to platinum of 0.013 was prepared by the same method as that described for the catalyst powder CP1 except that the hexahydroxo platinate nitrate solution was dropped in an amount equivalent to about 4.47 g of platinum, and the aqueous solution of gold chloride was dropped in an amount equivalent to about 0.06 g of gold. Hereinafter, the supported catalyst 5 thus obtained will be referred to as catalyst powder CP2.

### <Preparation of catalyst powder CP3>

A supported catalyst 5 having a molar ratio of gold to platinum of 0.015 was prepared by the same method as that described for the catalyst powder CP1 except that the hexahydroxo platinate nitrate solution was dropped in an amount equivalent to about 4.47 g of platinum, and the aqueous solution of gold chloride was dropped in an amount equivalent to about 0.07 g of gold. Hereinafter, the supported catalyst 5 thus obtained will be referred to as catalyst powder CP3.

### <Preparation of catalyst powder CP4>

A supported catalyst 5 having a molar ratio of gold to platinum of 0.020 was prepared by the same method as that described for the catalyst powder CP1 except that the hexahydroxo platinate nitrate solution was dropped in an amount equivalent to about 4.46 g of platinum, and the aqueous solution of gold chloride was dropped in an amount equivalent to about 0.09 g of gold. Hereinafter, the supported catalyst 5 thus obtained will be referred to as catalyst powder CP4.

### <Preparation of catalyst powder CP5>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, and the aqueous solution of gold chloride was dropped in an amount equivalent to about 0.24 g of gold. Hereinafter, the supported catalyst 5 thus obtained will be referred to as catalyst powder CP5.

### <Preparation of catalyst powder CP6>

A supported catalyst 5 having a molar ratio of gold to platinum of 0.111 was prepared by the same method as that described for the catalyst powder CP1 except that the hexahydroxo platinate nitrate solution was dropped in an amount equivalent to about 4.28 g of platinum, and the aqueous solution of gold chloride was dropped in an amount equivalent to about 0.48 g of gold. Hereinafter, the supported catalyst 5 thus obtained will be referred to as catalyst powder CP6.

### <Preparation of catalyst powder CP7>

A supported catalyst 5 having a molar ratio of gold to platinum of 0.4 was prepared by the same method as that described for the catalyst powder CP1 except that the hexahydroxo platinate nitrate solution was dropped in an amount equivalent to about 3.81 g of platinum, and the aqueous solution of gold chloride was dropped in an amount equivalent to about 1.54 g of gold. Hereinafter, the supported catalyst 5 thus obtained will be referred to as catalyst powder CP7.

### <Preparation of catalyst powder CP8>

A supported catalyst 5 having a molar ratio of gold to platinum of 0.5 was prepared by the same method as that described for the catalyst powder CP1 except that the hexahydroxo platinate nitrate solution was dropped in an amount equivalent to about 3.67 g of platinum, and the aqueous solution of gold chloride was dropped in an amount equivalent to about 1.85 g of gold. Hereinafter, the supported catalyst 5 thus obtained will be referred to as catalyst powder CP8.

### <Preparation of catalyst powder CP9>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, the aqueous solution of gold chloride was dropped in an amount equivalent to about 0.24 g of gold, and the heat treatment in the nitrogen atmosphere for alloying platinum with gold was not performed. Hereinafter, the supported catalyst 5 thus obtained will be referred to as catalyst powder CP9.

### <Preparation of catalyst powder CP10>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, the aqueous solution of gold chloride was dropped in an amount equivalent to about 0.24 g of gold, and the temperature at which the heat treatment in the nitrogen atmosphere for alloying platinum with gold was performed was changed to 200°C. Hereinafter, the supported catalyst 5 thus obtained will be referred to as catalyst powder CP10.

### <Preparation of catalyst powder CP11>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, the aqueous solution of gold chloride was dropped in an amount equivalent to about 0.24 g of gold, and the temperature at which the heat treatment in the nitrogen atmosphere for alloying platinum with gold was performed was changed to 400°C. Hereinafter, the supported catalyst 5 thus obtained will be referred to as catalyst powder CP11.

### <Preparation of catalyst powder CP12>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, the aqueous solution of gold chloride was dropped in an amount equivalent to about 0.24 g of gold, and the temperature at which the heat treatment in the nitrogen atmosphere for alloying platinum with gold was performed was changed to 600°C. Hereinafter, the supported catalyst 5 thus obtained will be referred to as catalyst powder CP12.

### <Preparation of catalyst powder CP13>

A supported catalyst 5 having a molar ratio of gold to platinum of 0.053 was prepared by the same method as that described for the catalyst powder CP1 except that the hexahydroxo platinate nitrate solution was dropped in an amount equivalent to about 4.39 g of platinum, the aqueous solution of gold chloride was dropped in an amount equivalent to about 0.24 g of gold, and the temperature at which the heat treatment in the nitrogen atmosphere for alloying platinum with gold was performed was changed to 800°C. Hereinafter, the supported catalyst 5 thus obtained will be referred to as catalyst powder CP13.

### <Determination of ratio of solid solution formation>

A ratio of solid solution formation was determined for each of the catalyst powders CP1 to CP13 by the following method. That is, an X-ray diffraction spectrum was obtained for the catalyst powder. Then, a ratio of solid solution formation was determined based on a shift of the peak for the (111) plane of platinum. The results of the determination are summarized in the Table below.

### <Manufacture of single cell electrodes SC1 to SC13>

A membrane electrode assembly 1 as shown in FIG. 1 was manufactured by the following method.

First, the catalyst powder CP1 was added to an organic solvent and was uniformly dispersed in the organic solvent using an ultrasonic homogenizer. Then, Teflon (registered trademark) sheets were coated with this dispersion, and the coating films were dried, thereby obtaining an anode catalyst layer 2 and a cathode catalyst layer 3 such that each had a catalyst coating amount of 0.4 mg per 1 cm² of the electrode area.

Then, the anode catalyst layer 2 and the cathode catalyst layer 3 were laminated one on the other via a proton-conductive solid electrolyte layer 4 by a hot press. In this way, a membrane electrode assembly 1 was manufactured.

Thereafter, diffusion layers were provided on the two surfaces of the membrane electrode assembly 1. The single cell electrodes thus obtained will be referred to as single cell electrode SC1.

Next, single cell electrodes were manufactured by the same method as that described for the single cell electrode SC1 except that the catalyst powders CP2 to CP13 were used instead of the catalyst powder CP1. Hereinafter, the single cell electrodes manufactured using the catalyst powders CP2 to CP13 will be referred to as single electrodes SC2 to SC13, respectively.

### <Evaluation of single cell electrodes SC1 to SC13>

Endurance of the single cell electrodes SC1 and SC13 was determined under the following conditions.

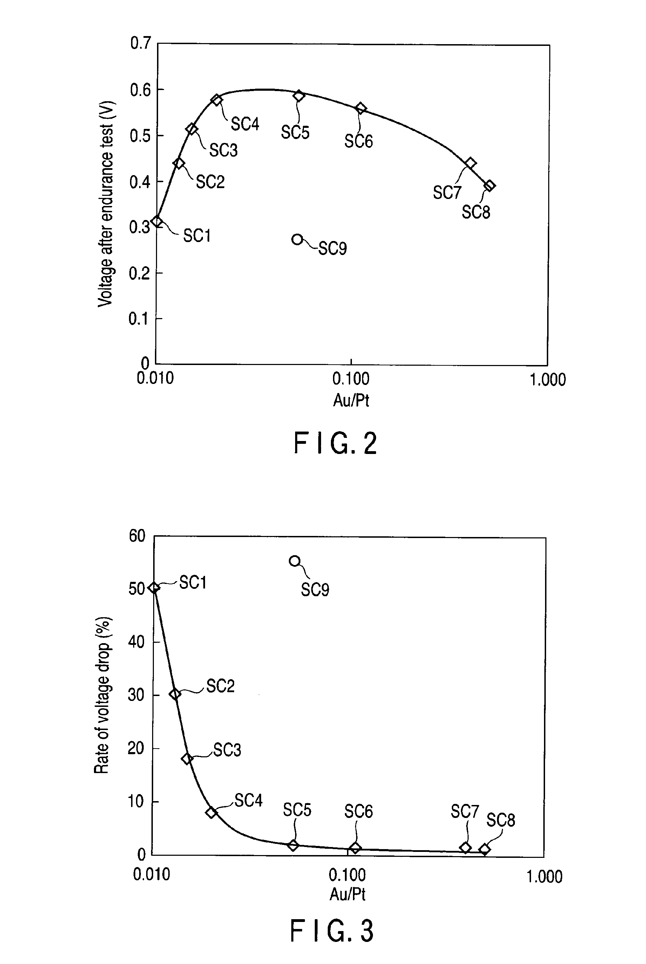

Specifically, each of the single cell electrodes SC1 to SC13 was caused to generate power by supplying humidified air from the side of the cathode catalyst layer 3 and supplying humidified hydrogen from the side of the anode catalyst layer 2. Here, the amount of air supply was 3.5 times the theoretical value thereof, while the amount of hydrogen supply was 3 times the theoretical value thereof. In addition, the bubbler temperatures on the side of the cathode catalyst layer 3 and on the side of the anode catalyst layer 2 were set at 60°C, and the temperature of single cell electrode was set at 80°C. The power generation was continued for 100 hours while switching the output current density of the single cell electrode between 0 A/cm² and 0.5 A/cm² at an interval of 5 seconds. In this way, a change in output voltage with the passage of time was determined. The results are summarized in the Table 1 below and FIGS. 2 to 5.

**Table 1**

| Single cell electrode | Au/Pt | Rate of voltage drop (%) | Initial voltage (V) | Voltage after endurance test (V) | Alloying temperature (°C) | Ratio of solid solution Formation (%) |
|---|---|---|---|---|---|---|
| SC1 | 0.010 | 50 | 0.630 | 0.315 | 1000 | 96 |
| SC2 | 0.013 | 30 | 0.630 | 0.441 | 1000 | 98 |
| SC3 | 0.015 | 18 | 0.630 | 0.517 | 1000 | 95 |
| SC4 | 0.020 | 8 | 0.630 | 0.580 | 1000 | 97 |
| SC5 | 0.053 | 2 | 0.600 | 0.588 | 1000 | 95 |
| SC6 | 0.111 | 1.5 | 0.570 | 0.561 | 1000 | 98 |
| SC7 | 0.400 | 1.5 | 0.450 | 0.443 | 1000 | 90 |
| SC8 | 0.500 | 1.3 | 0.400 | 0.395 | 1000 | 87 |
| SC9 | 0.053 | 55 | 0.610 | 0.275 | - | 0 |
| SC10 | 0.053 | 49 | 0.608 | 0.310 | 200 | 32 |
| SC11 | 0.053 | 13 | 0.605 | 0.528 | 400 | 50 |
| SC12 | 0.053 | 8 | 0.602 | 0.554 | 600 | 72 |
| SC13 | 0.053 | 4 | 0.603 | 0.579 | 800 | 84 |

In the above Table 1, "Au/Pt" indicates a molar ratio of gold to platinum in the supported catalyst. "Initial voltage" indicates an output voltage of the single cell electrode measured before the endurance test while setting the current density at 0.9 A/cm². "Voltage after endurance test" indicates an output voltage of the single cell electrode measured after the endurance test while setting the current density at 0.9 A/cm². "Rate of voltage drop" indicates a ratio of the voltage after endurance test with respect to the initial voltage. "Ratio of solid solution formation" indicates a ratio of gold forming a solid solution with respect to the whole amount of gold in the supported catalyst. "Alloying temperature" indicates a temperature of the heat treatment in the nitrogen atmosphere for alloying platinum with gold.

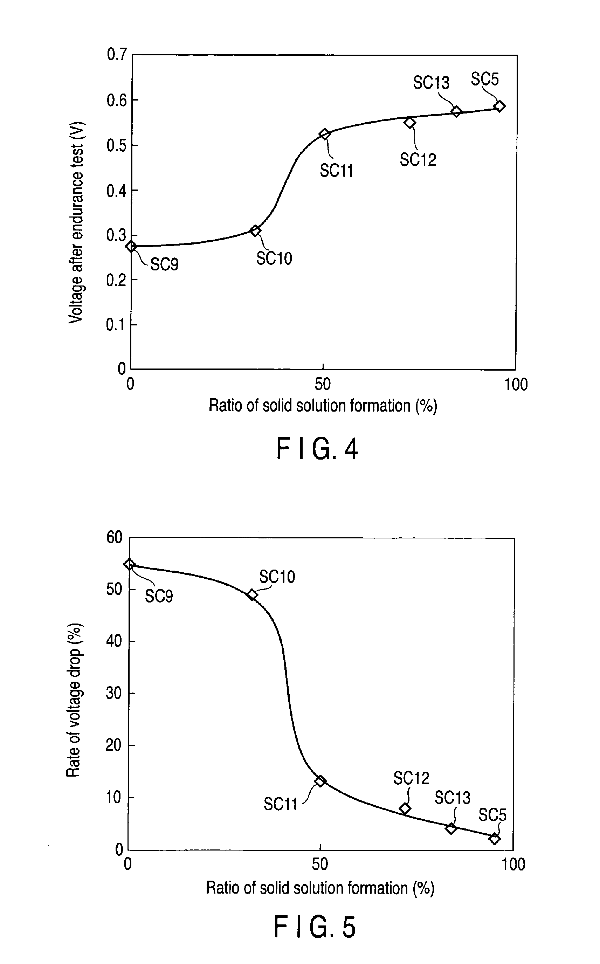

FIG. 2 is a graph showing an example of an effect of gold on a voltage after endurance test. FIG. 3 is a graph showing an example of an effect of gold on a rate of voltage drop. FIG. 4 is a graph showing an example of a relationship between a ratio of solid solution formation and a voltage after endurance test. FIG. 5 is a graph showing an example of a relationship between a ratio of solid solution formation and a rate of voltage drop.

In FIG. 2, the abscissa indicates a molar ratio of gold to platinum in the supported catalyst, while the ordinate indicates a voltage after endurance test. In FIG. 3, the abscissa indicates a molar ratio of gold to platinum in the supported catalyst, while the ordinate indicates a rate of voltage drop. In FIG. 4, the abscissa indicates a ratio of solid solution formation, while the ordinate indicates a voltage after endurance test. In FIG. 5, the abscissa indicates a ratio of solid solution formation, while the ordinate indicates a rate of voltage drop. It should be noted that the data plotted in FIGS. 2 and 3 was obtained for the single cell electrodes SC1 to SC9, while the data plotted in FIGS. 4 and 5 was obtained for the single cell electrodes SC9 to SC13.

As shown in Table 1 and FIGS. 2 and 3, the single cell electrodes 1 to 8 achieved a higher voltage after endurance test and a smaller rate of voltage drop as compared with the single cell electrode 9.

As will be apparent from the data for the single cell electrodes 1 to 9 in Table 1, when the molar ratio of gold to platinum in the supported catalyst was increased, the initial voltage was decreased. Further, as shown in FIG. 3, when the molar ratio was increased, the rate of voltage drop was decreased.

As shown in FIGS. 4 and 5, when the ratio of solid solution formation was increased, the voltage after endurance test increased, while the rate of voltage drop was decreased. Further, it was revealed that these changes were especially great within the range from about 30% to about 50% of the ratio of solid solution formation.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general invention concept as defined by the appended claims and their equivalents.

## Claims

1. A supported catalyst for a fuel cell, comprising:
a catalyst particle made of an alloy of platinum and gold; and
a conductive carrier supporting the catalyst particle,
wherein 50% or more of gold forms a solid solution with platinum.

2. The supported catalyst according to claim 1, wherein a molar ratio of gold to platinum falls within a range of 0.013 to 0.4.

3. The supported catalyst according to claim 1 or 2, wherein the conductive carrier is made of carbonaceous material.

4. A fuel cell comprising a catalyst layer including the supported catalyst according to any one of claims 1 to 3 as anode catalyst layer and/or cathode catalyst layer.
